# EUROPEAN PATENT SPECIFICATION

(11) **EP 0 823 302 B1**
(45) Date of publication and mention of the grant of the patent: **02.04.2003**
(21) Application number: 97305942.1
(22) Date of filing: 05.08.1997
(51) Int. Cl.: B23K 11/31

(54) **Electrode unit for resistance welding**
Elektrodeneinheit zum Widerstandsschweissen
Unité d'électrodes pour le soudage par résistance

(30) Priority: 07.08.1996 JP 20847996
(43) Date of publication of application: 11.02.1998
(73) Proprietor: SUMITOMO WIRING SYSTEMS, LTD., Yokkaichi City Mie 510 (JP)
(72) Inventor: Furukawa, Shigeki, Yokkaichi-city, Mie (JP); Higuchi, Hisashi, Yokkaichi-city, Mie (JP); Koike, Tsuyoshi, Yokkaichi-city, Mie (JP)
(74) Representative: Spall, Christopher John

(56) References cited:
- EP-A- 0 259 591
- DE-A- 3 822 150
- FR-A- 1 395 907
- US-A- 3 036 199
- US-A- 4 500 768
- US-A- 4 504 724
- US-A- 5 495 663
- PATENT ABSTRACTS OF JAPAN vol. 095, no. 006, 31 July 1995 & JP 07 065927 A (YAZAKI CORP), 10 March 1995,

## Description

The present invention relates to an electrode unit for resistance welding.

The welding of a plurality of wires by use of a resistance welder is known and disclosed, for instance, in Japanese Unexamined Patent Application No. HEI 7-65927. In general, such a welding apparatus has a pair of platens that are positioned facing one another in a fastening-separating relationship. On one platen, a guiding member with a bottom and sides is provided, the bottom of which is integral with a fixed electrode that is electrically connected to the platen. On the other platen, a movable electrode is provided for applying voltage to a work positioned between the fixed electrode and the movable electrode. With this structure, resistance welding is carried out by nipping a work which is positioned between the surrounding guide members, the fixed electrode and the movable electrode, with substantial voltage being applied between the electrodes.

In the above-noted welder, each electrode is individually loaded on a platen, so that it is extremely difficult to accurately position the center of each electrode, when electrodes are changed according to the different types of work to be welded. Especially with wire harnesses, where integrated joint welding with many wires bundled, and then connected in a batch manner, is to be carried out, a considerable period of time is needed for initial start-up, due to frequent changing of electrodes. In addition, if the positioning of the electrodes is incorrect, there exists the possibility of failure and consequent damage to the electrodes and the like, because of interference between the movable electrode and the edge of the surrounding members.

EP A 0 259 591,which is considered to represent the closest prior art, discloses a projection welding device for resistance welding a right angled projection to a girder. The device comprises upper and lower electrodes connected to upper and lower tool members respectively. The lower tool member is releasably securable to a table of the projection welding device and the upper tool member is releasably securable to an upwardly and downwardly movable ram or hammer. A plurality of vertical sleeves on the upper tool member co-operate with a plurality of columns on the lower tool member for guiding the tool members during displacement of the tools with respect to each other.

The present invention was made in view of the above-mentioned, problems, and with the object of providing an electrode unit for resistance welding capable of carrying out easy and fast exchange of platens.

In order to solve the above-noted problem, the present invention provides an electrode unit for resistance welding a work comprising an upper electrode attached to a shank releasably attachable to a first platen, and a lower electrode attached to a shank holder releasably attachable to a second platen wherein the shank holder integrally supports the shank for up and down movement relative to the shank holder in accordance with the movement of the first platen, and the shank holder includes a device for positioning the work between the electrodes, the device comprising a fixed guide member and a guide member movable towards a face of the fixed guide member whereby the work is held between the face and the movable guide member during resistance welding of the work.

The present invention enables the desired electrodes to be loaded or changed in a resistance welder without the extra need for adjusting the position of each electrode, by merely loading or detaching the shank and the shank holder from its corresponding platen. The shank holder. integrally supports the shank, thereby allowing the respective electrodes to be aligned in the correct positions.

Moreover, by mounting or detaching a shank and shank holder from opposing platens, it becomes possible to change electrodes on a resistance welder without the need for making position adjustment. Therefore, when changing electrodes according to the differing characteristics of the work, quicker changeover is facilitated. According to the present invention, performing changes of electrodes is both easier and quicker.

Furthermore, the present invention enables resistance welding to be carried out with the work surrounded by the guide members. Additionally, the movable electrode does not interfere with the guiding members because the electrodes are held in place by the shank and the shank holder.

The movable guide member may separate the work after welding by surrounding the work with the fixed guide member before the upper electrode engages the work with the lower electrode.

Preferably the electrode unit further comprises an interlocking mechanism which sequentially moves the movable guide member in cooperation with the shank.

Therefore the invention enables the movable guide member to be displaced utilising force from the resistance welding device to drive a platen.

Moreover, by using the mechanical drive force of the resistance welding unit to displace the movable guide member, it is unnecessary to provide additional driving mechanisms, lowering the cost of the welding unit.

The interlocking mechanism may include a link arm having a cam groove, a connecting member affixed to the shank, a cam roller attached to the connecting member and positioned in the cam groove of the link arm, and a connecting link connected to the link arm and movably attached to the movable guide member.

Advantageously the shank holder further comprises a set of water supply and drain pipes, with the shank holder having a channel connected with this piping for enabling cooling water to circulate therethrough. This makes it possible to cool areas in the shank holder, by circulating cooling water through the cooling water channel, thereby allowing the lower electrode to be integrally housed therein.

Further, the present invention allows cooling water to circulate within the electrode unit, which makes piping simpler and smaller, and improves workability.

Additionally, by sectioning a channel in the fixed portion of the electrode unit, not in the movable portion of the electrode unit, the potential for water leakage is minimised. Moreover, periodic checking of the piping of such a system becomes unnecessary. According to another aspect of the invention, the electrode unit includes a base plate connected to the shank holder and detachably fastened to the second platen. The base plate may include a bolt having a head with a flange, wherein the bolt head is mated with a concave shaped groove in the second platen for connecting the base plate with the second platen. Alternatively, the second platen may have a guide block and a stopper block attached thereto, such that the base plate of the electrode unit is detachably guided onto the second platen.

The present invention is further explained in the description which follows with reference to the drawings, illustrating, by way of nonlimiting examples, various embodiments of the invention, with like reference representing similar parts, and wherein:
**Figure 1** is a perspective view of one embodiment of the present invention;
**Figure 2A** is a front view of the electrode unit of Figure 1;
**Figure 2B** is a side view of the electrode unit of Figure 1;
**Figure 3A** is a side perspective view of the shank holder of Figure 1;
**Figure 3B** is a rear elevation view of the shank holder of Figure 1;
**Figure 3C** is a bottom section view of the shank holder of Figure 1; and
**Figure 4** is a schematic representation of another aspect of the present invention.

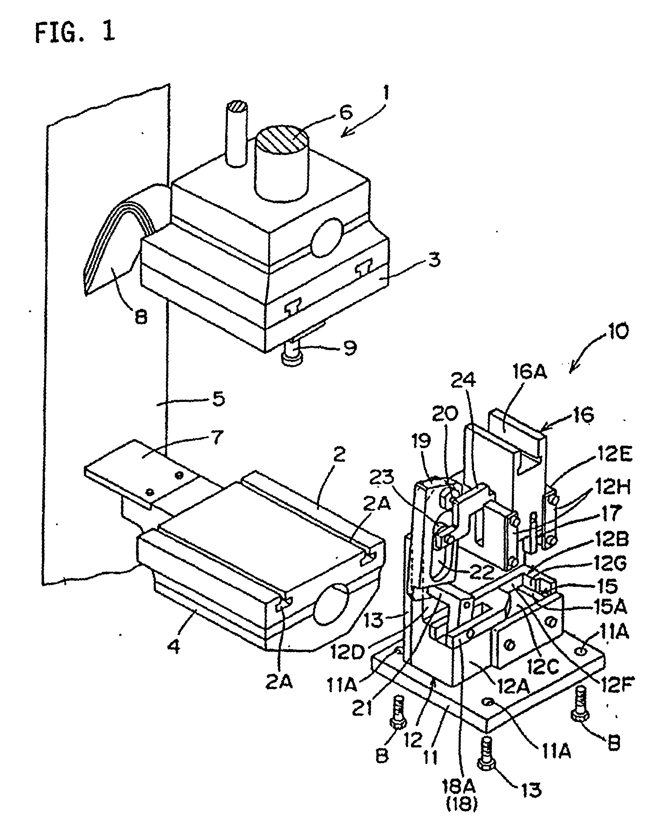

Figure 1 is a perspective view of one embodiment of the present invention. As shown in the drawing, an aspect of this embodiment is a provision for an electrode unit 10 having a detachably integrated structure.

In Figure 1 of the accompanying drawings, platens 2 and 3 of a resistance welder 1 are conductive members of substantially square shape, and are arranged in opposing upward and downward relationship with respect to each other. The platen 2 is fixedly mounted to a body frame 5 of resistance welder 1 by means of a supporting member 4. The platen 3 is also secured to the body frame 5 by means of a flexible conductive member 8, and provides a detachable mounting for a press device 6 (only a rod of which is shown in Figure 1) of the resistance welder. The platen 3 is thereby movable upwardly and downwardly. Conductive members 7 and 8 connected with the platens 2 and 3, respectively, are also connected to an electric circuit (not shown) provided in the body frame 5.

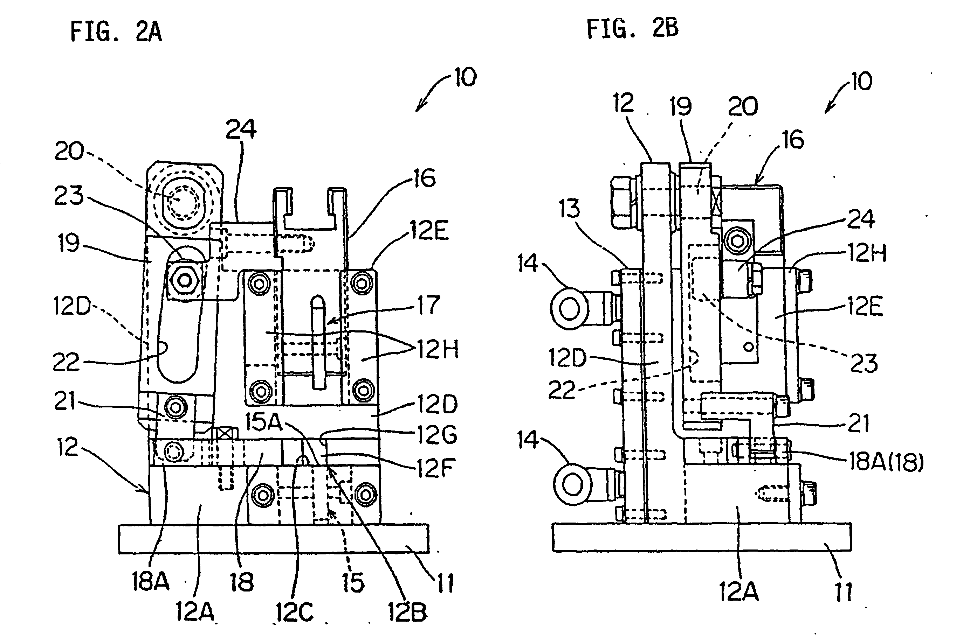

Figure 2A of the drawings is a front perspective view and Figure 2B is a side perspective view of an electrode unit 10 of the welder depicted in Figure 1. As shown in Figures 2A and 2B, the electrode unit 10 of the present invention provides for integral welding of stripped ends of bundled coiled wires. The electrode unit 10 is equipped with a base plate 11 connected with the platen 2. The base plate 11 is detachably and electrically conductively fastened to the platen 2 with bolts B inserted through insertion holes 11A formed in the four corners of base plate 11. The platen 2 has two substantially concave shaped or T-shaped grooves 2A running fore and aft, such that the heads of bolts B can be inserted thereinto and are movable within a limited range. Nuts for the bolts B are not shown in Figure 1, but are screw fitted therewith from the upper side of base plate 11. The base plate 11 is formed of a material with high conductivity such as chrome copper, and is fastened with a shank holder 12 by small screws (not shown).

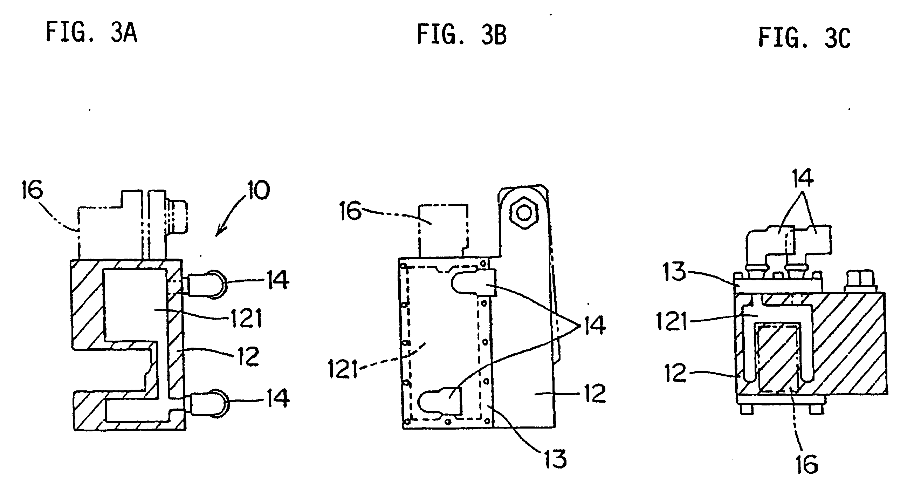

Figure 3A is a side view, Figure 3B is a rear elevation view, and Figure 3C is a bottom view of the shank holder of the electrode unit depicted in the embodiment of Figure 1. With references to Figures 3A-3C, the shank holder 12 is formed of a material of high electrical resistance such as cast iron (for instance, nodular graphite cast iron; JIS-FCD-45). In the embodiment shown in the drawing, the interior of shank holder 12 contains a channel 121 covered by a back plate 13, such that cooling water circulates through a set of pipes 14 mounted on the back plate 13. A pipe set 14 enables water supply and drainage, and includes a water supply inlet at one end and a water drain outlet at the other end. In addition, the channel 121 contains sections which permit the circulation of cooling water to cool the necessary areas of the shank holder 12, which is integrated with electrodes 15 and 17 and is to be later described. In this respect, because holders of a pair of electrodes have heretofore been separated, it has been necessary to section the channel which circulates cooling water from a plurality of water supply and drain pipes to obtain the required cooling effect. In such arrangements, various problems have been encountered, such as complicated forms of piping, decreases in workability, larger applicator sizes, regular repair and replacement of piping, etc. In addition, since piping has been required in working areas, such structures have been susceptible to water leakage.

As shown in Figures 1, 2A and 2B, the shank holder 12 includes a guide block 12A which is mounted on the base plate 11. The guide block 12A is formed of substantially square shape which extends left and right from a side perspective view and on the upper surface of which is positioned the lower front end of a step 12B. The upper surface 15A of the electrode 15 which is fixed is integral with a surface 12C at the bottom of the step 12B, and is electrically conductively connected with the base plate 11.

The shank holder 12 is equipped with a shank guide 12E and is connected with the guide block 12A through a plate area 12D. A shank guide 12E is block-shaped with a vertical channel as viewed from above. This allows the shank 16 to move upwardly and downwardly against the upper surface 15A of the lower electrode 15. The shank 16 is composed of a material high conductivity, such as chrome copper, and its upper end contains a concave shaped or T-shaped groove 16A running fore and aft. The groove 16A is mated with a rod 9 having a flange for connection with the platen 3. The groove 16A allows rod 9 to be inserted in a forward and aft direction, and the shank 16 is structurally integral to, and electrically conductive with the platen 3. The upper electrode 17 which is movable is fastened to the lower end of the shank 16, and applies voltage. to the work in. collaboration with the fixed electrode 15. The upper electrode 17 is electrically conductively connected with the platen 3 through the shank 16. In Figures 1, 2A and 2B, 12H is a front guide plate which controls the shank 16 for passage through the shank guide 12E in the upward and downward directions.

As shown in Figures 1 and 2A, the lower electrode 15 is integrally mounted to guide the block 12A on the shank holder 12, whilst the upper electrode 17 is integrally fastened to the shank 16, the position of which is guided by the shank holder 12. Therefore, the position of the electrodes 15 and 17 in fore and aft directions and in right and left directions are precisely controlled. Moreover, with the embodiment shown in the drawings, by merely mounting the electrodes 15 and 17 onto the platens 2 and 3 by use of the shank holder 12 and the shank 16, the alignment of the electrodes of a resistance welder is made possible without any need for position adjustment.

The structure for positioning a wire (not shown) on the lower fixed electrode 15 is next described. First, the electrode 15 has an oblong rectangular surface area 15A running in the forward and aft directions, when viewed from the front. The exposed electrode surface 15A is flush with the surface 12C of the guide block 12A, and two portions of surface 15A are positioned at right angles to faces 12F and 12G of the fixed guide member 12B. The faces 12F and 12G of the fixed guide member 12B cooperate to position the wire against the fixed electrode 15 in the embodiment depicted in the drawing. The face 12F, which extends in a direction perpendicular to electrode surface 15A, also guides a guide member 18 on a movable path along the surface 12C. The guide member 18 is positioned in opposing relationship to the face 12G, and is movable fore and aft in a direction perpendicular to the surface 15A of the electrode 15.

In order to facilitate movement of the guide member 18 in left and right directions relative to the plate area 12D of the shank holder 12, an interlocking mechanism is incorporated. The mechanism comprises a link arm 19 having an upper end supported by means of a rotating pin 20, and a lower end of the link arm 19 connected with a fork-shaped end 18A of the guide member 18 through connecting link 21. The link arm 19 has a cam groove 22 with longitudinally extending guide edges, and a cam roller 23 is slidably coupled for longitudinal movement in the cam groove 22. The cam roller 23 is fastened to the shank 16 through a connecting member 24 such that when the shank 16 is at its upper position (when welding is not being performed), the cam roller 23 is positioned at the top of the cam groove 22 and the guide member 18 is displaced away from the face 12G of the guide member 12. As shown in Figure 2A, downward movement of the shank 16 during welding causes the link arm 19 to rotate about the pin 20 such that the link arm 19 is moved in a counterclockwise direction as depicted in Figure 2A. This thereby enables the guide member 18 to nip the cable or wire between its end face and the face 12G, as the cable or wire is positioned between the electrodes 15 and 17.

With the structure described above, the electrode unit 10 can be mounted on the resistance welder 1 such that the electrodes 15 and 17 can be accurately aligned without the need of adjusting the relative positions of the electrodes. This is achieved by fastening base plate 11 to the platen 2 and by connecting the shank 16 to the platen 3.

. During operation, the press device 6 of the resistance welder 1 is driven by a foot switch (not shown here), and the cable is nipped between the electrodes 15 and 17 as the platen 3 is lowered towards the platen 2 and power is applied for predetermined time while resistance welding is carried out. After the guide member 18 encloses a cable between the faces 12F and 12G, resistance welding is carried out with the upper electrode 17 and the lower electrode 15 nipping the cable between them, thereby securely positioning the cable between the electrodes and allowing for a favorable welding area.

In the embodiment described above, by providing a plurality of units 10 according to the kinds of cables to be welded, the mounting and changing of the desired electrodes on the resistance welder can be made possible without the need for adjustment of the position of respective electrodes 15 and 17. This is achieved by detaching a shank 16 and a shank holder 12 from the platens 2 and 3. Consequently, even where the electrodes 15 and 17 are changed according to the work to be welded, adjusting the positions of both electrodes becomes unnecessary, resulting in faster changeover. Therefore, according to the above-noted embodiment, the remarkable effects of easy and fast electrode changeover can be attained.

Because the press device 6 of the resistance welder 1 provides the necessary motive force to displace the guide member 18, the provision of another driving mechanism for the guide member 18 is unnecessary. This therefore provides the advantage of lower cost of manufacturing. In addition, since cooling water is circulated by the water supply and drainage pipes 14, and thus allows for cooling where needed, the advantages of simple piping, higher workability and smaller size of electrode unit, and the like can be attained. Moreover, since the channel 121 and the water supply and drainage pipes 14 are provided on the shank holder 12, which is a non-moving member, the potential for water leakage is minimized.

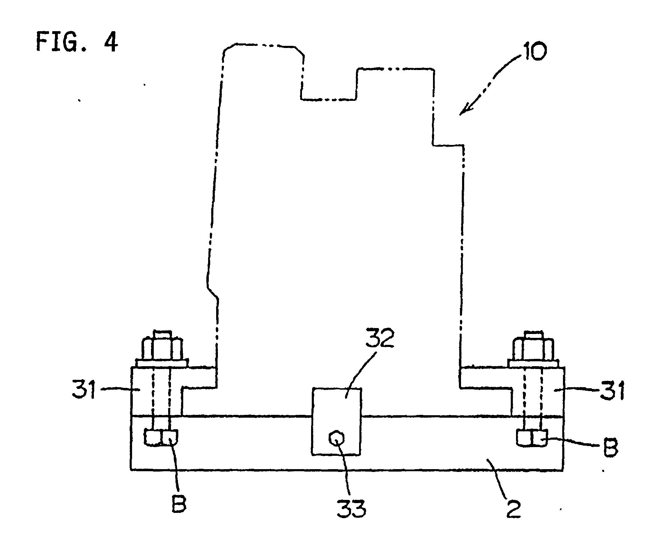

The embodiment described above is a mere example of the preferred embodiment of the present invention, which is not limited in scope to such embodiment. For instance, as depicted in Figure 4 another aspect of the teachings of the current invention is provided. Figure 4 is a schematic elevation view showing the essential parts of a modified example of the present invention. In the drawing, a pair of guide blocks 31 and a stopper member 32 are provided on the platen 2. The guide blocks 31 detachably guide the electrode unit only in the forward and aft directions. Likewise, the stopper 32, which is attached to bolt 33, limits movement in the forward and aft directions. Therefore, by rotating the stopper member 32 by loosening the bolt 33, and then by releasing the electrode unit 10, the electrode unit 10 can be withdrawn forward and removed from the resistance welding device. Conversely, the electrode unit 10 can be loaded onto the platen 2 and fastened securely thereon with the stopper member 32.

Additionally, various design alterations also can be carried out within the scope of the claims of the present invention.

## Claims

1. An electrode unit for resistance welding a work comprising an upper electrode (17) attached to a shank (16) releasably attachable to a first platen (3), and a lower electrode (15) attached to a shank holder (12) releasably attachable to a second platen (2) wherein the shank holder (12) integrally supports the shank (16) for up and down movement relative to the shank holder (12) in accordance with the movement of the first platen (3), and the shank holder (12) includes a device for positioning the work between the electrodes (15,17), the device comprising a fixed guide member (12B) and a guide member (18) movable towards a face (12G) of the fixed guide member (12B) whereby the work is held between the face (12G) and the movable guide member (18) during resistance welding of the work.

2. An electrode unit for resistance welding a work according to claim 1, wherein the device includes a further face (12F) of the fixed guide member (12B) which co-operates with face (12G) of the fixed side (12B) to position the work and is arranged to guide the member (18) towards the face (12G) of the fixed side (12B).

3. An electrode unit for resistance welding a work according to claim 2, wherein the face (12G) of the fixed side (12B) is perpendicular to an electrode surface (15A) of the lower electrode (15) and the further fixed face (12F) of the fixed side (12B) is perpendicular to both the face (12G) of the fixed side (12B) and the electrode surface (15A) of the lower electrode (15).

4. An electrode unit for resistance welding a work according to any preceding claim, further comprising an interlocking mechanism, for enabling the guide member (18) to move towards the face (12G) of the fixed side (12B) in conjunction with downward movement of the shank (16).

5. An electrode unit for resistance welding a work according to claim 4, wherein the interlocking mechanism further comprises a link arm (19) having a cam groove (22), a connecting member (24) having a first end and a second end, the first end of the connecting member (24) being affixed to the shank (16), a cam roller (23) attached to the second end of the connecting member (24) positioned in the cam groove (22) of the link arm (19), and a connecting link (21) connected to the link arm (19), the guide member (18) being movably attached to the connecting link (21).

6. An electrode unit for resistance welding a work according to claim 5, wherein the guide member (18) has a fork-shaped end (18A) movably attached to the connecting link (21).

7. An electrode unit for resistance welding a work according to any one of the preceding claims, wherein the guide member (18) is adapted to move substantially horizontally.

8. An electrode unit for resistance welding a work according to any one of the preceding claims, wherein the shank (16) has an upper end with a groove (16A) arranged to be mated with a rod (9) having a flange extending from a lower end of the first platen (3) for connecting the upper electrode (15) to the platen (3).

9. An electrode unit for resistance welding according to claim 8, wherein the groove (16A) of the shank (16) is "T"-shaped.

10. An electrode unit for resistance welding a work according to any one of the preceding claims, wherein the shank holder (12) comprises a shank guide (12E) having a channel that permits vertical movement of the shank (16).

11. An electrode unit for resistance welding a work according to claim 10, wherein the channel of the shank guide (12E) is block-shaped.

12. An electrode unit for resistance welding a work according to claim 10 or claim 11, wherein the shank guide (12E) is formed of a material of high electrical resistance.

13. An electrode unit for resistance welding a work according to any one of claims 10,11 or 12, wherein the shank guide (12E) is fixedly mounted to the shank holder (12).

14. An electrode unit for resistance welding a work according to any one of the preceding claims, further comprising a base plate (11) connected to the shank holder (12) wherein the base plate (11) is releasably attachable to the second platen (2).

15. An electrode unit for resistance welding a work according to claim 14, wherein the base plate (11) is releasably attachable to the second platen (3) to be in electrical contact with the second platen (2).

16. An electrode unit for resistance welding according to claim 14 or claim 15, wherein the base plate (11) is formed of a material of high electrical conductivity.

17. An electrode unit for resistance welding a work according to any one of claims 14-16, wherein the base plate (11) further comprises a bolt (B) attached to the base plate (11), and the bolt (B) has a head with a flange, the bolt head being mated with a groove (2A) of the second platen (2) for releasably attaching the base plate (11) with the second platen (2).

18. An electrode unit for resistance welding a work according to claim 17, wherein the groove (2A) of the second platen (2) is "T"-shaped.

19. An electrode unit for resistance welding a work according to any one of the preceding claims, wherein the electrode unit is releasably attached to the second platen (2) by a guide block (31) attached to the second platen (2), and a stopper member (32) attached to the second platen (2).

20. An electrode unit for resistance welding a work according to claim 19, wherein the guide block (31) releasably guides the base plate (11) onto the second platen (2).

21. An electrode unit for resistance welding a work according to any one of the preceding claims, wherein the shank holder (12) further comprises a set of water supply and drain pipes (14), and a channel (121) connected therebetween enables cooling water to circulate throughout.

## Patentansprüche

1. Elektrodeneinheit für ein Widerstandsschweißen eines Werkstücks, umfassend eine obere Elektrode (17), welche an einem Schaft (16) festgelegt ist, welcher lösbar an einer ersten Platte bzw. Auflageplatte (3) festgelegt ist, und eine untere Elektrode (15), welche an einem Schafthalter (12) festgelegt ist, welcher an einer zweiten Platte bzw. Auflageplatte (2) lösbar festgelegt ist, worin der Schafthalter (12) integral den Schaft (16) für eine Auf- und Abwärtsbewegung relativ zu dem Schafthalter (12) in Übereinstimmung mit der Bewegung der ersten Platte (3) abstützt bzw. trägt, und der Schafthalter (12) eine Vorrichtung zum Positionieren des Werkstücks zwischen den Elektroden (15, 17) beinhaltet, wobei die Vorrichtung ein fixiertes bzw. festgelegtes Führungsglied (12B) und ein Führungslied (18) umfasst, welches zu einer Fläche bzw. Seite (12G) des festgelegten Führungsglieds (12B) bewegbar ist, wodurch das Werkstück zwischen der Fläche (12G) und dem bewegbaren Führungsglied (18) während eines Widerstandsschweißens des Werkstücks gehalten ist.

2. Elektrodeneinheit für ein Widerstandsschweißen eines Werkstücks gemäß Anspruch 1, worin die Vorrichtung eine weitere Fläche bzw. Seite (12F) des festgelegten Führungsglieds (12B) beinhaltet, welche mit der Fläche (12G) der festgelegten Seite (12B) zusammenwirkt, um das Werkstück zu positionieren, und angeordnet ist, um das Glied (18) zu der Fläche (12G) der festgelegten Seite (12B) zu führen.

3. Elektrodeneinheit für ein Widerstandsschweißen eines Werkstücks gemäß Anspruch 2, worin die Fläche (12G) der festgelegten Seite (12B) normal auf eine Elektrodenoberfläche (15A) der unteren Elektrode (15) steht und die weitere festgelegte Fläche (12F) der festgelegten Seite (12B) normal sowohl auf die Fläche (12G) der festgelegten Seite (12B) als auch auf die Elektrodenoberfläche (15A) der unteren Elektrode (15) steht.

4. Elektrodeneinheit für ein Widerstandsschweißen eines Werkstücks gemäß einem der vorangehenden Ansprüche, weiters umfassend einen Verriegelungsmechanismus, um dem Führungglied (18) zu erlauben, sich zu der Fläche (12G) der festgelegten Seite (12B) im Zusammenhang bzw. im Zusammenwirken mit einer Abwärtsbewegung des Schafts (16) zu bewegen.

5. Elektrodeneinheit für ein Widerstandsschweißen eines Werkstücks gemäß Anspruch 4, worin der Verriegelungmechanismus weiters einen Gelenk- bzw. Verbindungsarm (19), welcher eine Nockenrille (22) aufweist, ein Verbindungsglied (24), welches ein erstes Ende und ein zweites Ende aufweist, wobei das erste Ende des Verbindungsglieds (24) an dem Schaft (16) festgelegt ist, einen Nockenstößel bzw. eine Nockenrolle (23), welcher an dem zweiten Ende des Verbindungsglieds (24) festgelegt ist, welches in der Nockenrille (22) des Verbindungsarms (19) positioniert ist, und ein Verbindungsglied (21) umfasst, welches mit dem Verbindungsarm (19) verbunden ist, wobei das Führungsglied (18) bewegbar an dem Verbindungsglied (21) festgelegt ist.

6. Elektrodeneinheit für ein Widerstandsschweißen eines Werkstücks gemäß Anspruch 5, worin das Führungsglied (18) ein gabelförmiges Ende (18A) aufweist, welches bewegbar an dem Verbindungsglied (21) festgelegt ist.

7. Elektrodeneinheit für ein Widerstandsschweißen eines Werkstücks gemäß einem der vorangehenden Ansprüche, worin das Führungsglied (18) adaptiert ist, um sich im wesentlichen horizontal zu bewegen.

8. Elektrodeneinheit für ein Widerstandsschweißen eines Werkstücks gemäß einem der vorangehenden Ansprüche, worin der Schaft (16) ein oberes Ende mit einer Rille (16A) aufweist, welches angeordnet ist, um mit einer Stange (9) übereinzustimmen bzw. zusammenzupassen, welche einen Flansch aufweist, welcher sich von einem unteren Ende der ersten Platte (3) erstreckt, um die obere Elektrode (15) mit der Platte (3) zu verbinden.

9. Elektrodeneinheit für ein Widerstandsschweißen gemäß Anspruch 8, worin die Rille (16A) des Schafts (16) T-förmig ist.

10. Elektrodeneinheit für ein Widerstandsschweißen eines Werkstücks gemäß einem der vorangehenden Ansprüche, worin der Schafthalter (12) eine Schaftführung (12E) umfasst, welche einen Kanal aufweist, welcher eine vertikale Bewegung des Schafts (16) erlaubt.

11. Elektrodeneinheit für ein Widerstandsschweißen eines Werkstücks gemäß Anspruch 10, worin der Kanal der Schaftführung (12E) blockförmig ist.

12. Elektrodeneinheit für ein Widerstandsschweißen eines Werkstücks gemäß Anspruch 10 oder Anspruch 11, worin die Schaftführung (12E) aus einem Material mit hohem elektrischen Widerstand ausgebildet ist.

13. Elektrodeneinheit für ein Widerstandsschweißen eines Werkstücks gemäß einem der Ansprüche 10, 11 oder 12, worin die Schaftführung (12E) fest an der Schafthalterung (12) montiert ist.

14. Elektrodeneinheit für ein Widerstandsschweißen eines Werkstücks gemäß einem der vorangehenden Ansprüche, weiters umfassend eine Basisplatte (11), welche mit dem Schafthalter (12) verbunden ist, worin die Basisplatte (11) lösbar an der zweiten Platte (2) festlegbar ist.

15. Elektrodeneinheit für ein Widerstandsschweißen eines Werkstücks gemäß Anspruch 14, worin die Basisplatte (11) lösbar an der zweiten Platte (3) festlegbar ist, um sich in elektrischem Kontakt mit der zweiten Platte (2) zu befinden.

16. Elektrodeneinheit für ein Widerstandsschweißen gemäß Anspruch 14 oder Anspruch 15, worin die Basisplatte (11) aus einem Material hoher elektrischer Leitfähigkeit ausgebildet ist.

17. Elektrodeneinheit für ein Widerstandsschweißen eines Werkstücks gemäß einem der Ansprüche 14-16, worin die Basisplatte (11) weiters einen Bolzen (B) umfasst, welcher an der Basisplatte (11) festgelegt ist, und der Bolzen (B) einen Kopf mit einem Flansch aufweist, wobei der Bolzenkopf mit einer Rille (2A) der zweiten Platte (2) für ein lösbares Festlegen der Basisplatte (11) an der zweiten Platte (2) zusammengepaßt bzw. abgestimmt ist.

18. Elektrodeneinheit für ein Widerstandsschweißen eines Werkstücks gemäß Anspruch 17, worin die Rille (2A) der zweiten Platte (2) T-förmig ist.

19. Elektrodeneinheit für ein Widerstandsschweißen eines Werkstücks gemäß einem der vorangehenden Ansprüche, worin die Elektrodeneinheit lösbar an der zweiten Platte (2) durch einen Führungsblock (31) festgelegt ist, welcher an der zweiten Platte (2) festgelegt ist, und ein Stopp- bzw. Anschlagglied (32) an der zweiten Platte (2) festgelegt ist.

20. Elektrodeneinheit für ein Widerstandsschweißen eines Werkstücks gemäß Anspruch 19, worin der Führungsblock (31) lösbar die Basisplatte (11) an der zweiten Platte (2) führt.

21. Elektrodeneinheit für ein Widerstandsschweißen eines Werkstücks nach einem der vorangehenden Ansprüche, worin der Schafthalter (12) weiters einen Satz von Wasserzufuhr- und -ablaßrohren (14) umfasst und ein Kanal (121), welcher dazwischen angeschlossen ist, ermöglicht, daß Kühlwasser dadurch zirkuliert.

## Revendications

1. Unité d'électrodes pour soudage par résistance d'une pièce, comprenant une électrode supérieure (17) attachée à un coulisseau (16) qui peut être attaché de façon démontable à un premier plateau (3), et une électrode inférieure (15) attachée à un porte-coulisseau (12) qui peut être attaché de façon démontable à un deuxième plateau (2), dans laquelle le porte-coulisseau (12) supporte solidairement le coulisseau (16) pour un mouvement vers le haut et le bas par rapport au porte-coulisseau (12) conformément au mouvement du premier plateau (3), et le porte-coulisseau (12) comprend un dispositif de positionnement de la pièce entre les électrodes (15, 17), ce dispositif comprenant un élément de guidage fixe (12B) et un élément de guidage (18) déplaçable vers une face (12G) de l'élément de guidage fixe (12B) de sorte que la pièce est tenue entre la face (12G) et l'élément de guidage mobile (18) pendant le soudage par résistance de la pièce.

2. Unité d'électrodes pour soudage par résistance d'une pièce selon la revendication 1, dans laquelle le dispositif comprend une autre face (12F) de l'élément de guidage fixe (12B) qui coopère avec la face (12G) de l'élément de guidage fixe (12B) pour positionner la pièce, et qui est agencée de manière à guider l'élément de guidage (18) vers la face (12G) du côté fixe (12B).

3. Unité d'électrodes pour soudage par résistance d'une pièce selon la revendication 2, dans lequel la face (12G) du côté fixe (12B) est perpendiculaire à une surface d'électrode (15A) de l'électrode inférieure (15), et l'autre face fixe (12F) du côté fixe (12B) est perpendiculaire à la fois à la face (12G) du côté fixe (12B) et à la surface d'électrode (15A) de l'électrode inférieure (15).

4. Unité d'électrodes pour soudage par résistance d'une pièce selon une quelconque des revendications précédentes, comprenant en outre un mécanisme d'interconnexion pour commander l'élément de guidage (18) de sorte qu'il se déplace vers la face (12G) du côté fixe (12B) en conjonction avec le mouvement de descente du coulisseau (16).

5. Unité d'électrodes pour soudage par résistance d'une pièce selon la revendication 4, dans laquelle le mécanisme d'interconnexion comprend en outre un bras de liaison (19) comportant une rainure de came (22), un élément de connexion (24) ayant une première extrémité et une deuxième extrémité, la première extrémité de l'élément de connexion (24) étant fixée au coulisseau (16), un galet de came (23) attaché à la deuxième extrémité de l'élément de connexion (24) et placé dans la rainure de came (22) du bras de liaison (19), et une biellette (21) connectée au bras de liaison (19), l'élément de guidage (18) étant attaché de façon mobile à la biellette (21).

6. Unité d'électrodes pour soudage par résistance d'une pièce selon la revendication 5, dans laquelle l'élément de guidage (18) a une extrémité fourchue (18A) attachée de façon mobile à la biellette (21).

7. Unité d'électrodes pour soudage par résistance d'une pièce selon une quelconque des revendications précédentes, dans laquelle l'élément de guidage (18) est agencé de manière à se déplacer sensiblement horizontalement.

8. Unité d'électrodes pour soudage par résistance d'une pièce selon une quelconque des revendications précédentes, dans laquelle le coulisseau (16) a une extrémité supérieure comportant une rainure (16A) prévue pour s'accoupler avec une tige (9) ayant une collerette et s'étendant à partir d'une extrémité inférieure du premier plateau (3), pour connecter l'électrode supérieure (15) au plateau (3).

9. Unité d'électrodes pour soudage par résistance selon la revendication 8, dans laquelle la rainure (16A) du coulisseau (16) est en forme de T.

10. Unité d'électrodes pour soudage par résistance d'une pièce selon une quelconque des revendications précédentes, dans laquelle le porte-coulisseau (12) comprend un guidage de coulisseau (12E) ayant un profil en U qui permet un mouvement vertical du coulisseau (16).

11. Unité d'électrodes pou soudage par résistance d'une pièce selon la revendication 10, dans laquelle le guidage de coulisseau à profil en U (12E) est en forme de bloc.

12. Unité d'électrodes pour soudage par résistance d'une pièce selon la revendication 10 ou la revendication 11, dans laquelle le guidage de coulisseau (12E) est fabriqué en une matière de résistance électrique élevée.

13. Unité d'électrodes pour soudage par résistance d'une pièce selon une quelconque des revendications 10, 11 ou 12, dans laquelle le guidage de coulisseau (12E) est monté de façon fixe sur le porte-coulisseau (12).

14. Unité d'électrodes pour soudage par résistance d'une pièce selon une quelconque des revendications précédentes, comprenant en outre une plaque de base (11) reliée au porte-coulisseau (12), dans laquelle la plaque de base (11) peut être attachée de façon démontable au deuxième plateau (2).

15. Unité d'électrodes pour soudage par résistance d'une pièce selon la revendication 14, dans laquelle la plaque de base (11) peut être attachée de façon démontable au deuxième plateau (2) de façon à être en contact électrique avec le deuxième plateau (2).

16. Unité d'électrodes pour soudage par résistance d'une pièce selon la revendication 14 ou la revendication 15, dans laquelle la plaque de base (11) est fabriquée en une matière de conductivité électrique élevée.

17. Unité d'électrodes pour soudage par résistance d'une pièce selon une quelconque des revendications 14 à 16, dans laquelle la plaque de base (11) comprend en outre une vis (B) attachée à la plaque de base (11), et la vis (B) a une tête avec une collerette, la tête de vis étant en prise avec une rainure (2A) du deuxième plateau (2) pour fixation de façon démontable de la plaque de base (11) au deuxième plateau (2).

18. Unité d'électrodes pour soudage par résistance d'une pièce selon la revendication 17, dans laquelle la rainure (2A) du deuxième plateau (2) est en forme de T.

19. Unité d'électrodes pour soudage par résistance d'une pièce selon une quelconque des revendications précédentes, dans laquelle l'unité d'électrodes est attachée de façon démontable au deuxième plateau (2) par un bloc de guidage (31) attaché au deuxième plateau (2), et un élément de butée (32) est attaché au deuxième plateau (2).

20. Unité d'électrodes pour soudage par résistance d'une pièce selon la revendication 19, dans laquelle le bloc de guidage (31) guide de façon libérable la plaque de base (11) sur le deuxième plateau (2).

21. Unité d'électrodes pour soudage par résistance d'une pièce selon une quelconque des revendications précédentes, dans laquelle le porte-coulisseau (12) comprend en outre un ensemble de tuyaux d'amenée et d'évacuation d'eau (14), et un canal (121) connecté entre ces tuyaux permet la circulation d'eau de refroidissement dans le porte-coulisseau.
